# EUROPEAN PATENT SPECIFICATION

(11) **EP 0 508 718 B1**
(45) Date of publication and mention of the grant of the patent: **19.03.1997**
(21) Application number: 92303062.1
(22) Date of filing: 07.04.1992
(51) Int. Cl.: F16H 3/10, B25B 21/00

(54) **Automatic transmission**
Automatikgetriebe
Transmission automatique

(30) Priority: 12.04.1991 GB 9107785
(43) Date of publication of application: 14.10.1992
(73) Proprietor: Yang, Tai-Her, Si-Hu Town Dzan-Hwa (TW)
(72) Inventor: Yang, Tai-Her, Si-Hu Town Dzan-Hwa (TW)
(74) Representative: Arthur, Bryan Edward

(56) References cited:
- WO-A-88/09450
- US-A- 2 042 235
- US-A- 3 517 574

## Description

As is well known, the coupling of conventional mechanical gears is limited to be between two axles. If more than one set of drive wheels are coupled, the drive wheels must be of identical driving ratio otherwise the transmission will mesh and lock so that driving between the axles is not possible.

PCTWO88/09450 discloses an automatic transmission including an input shaft and an output shaft, the shafts being interconnected via drive wheels. The input shaft includes a portion with external threads on which a first driving wheel having a complimentary internal thread is mounted in such a way that the first driving wheel means is slightly axially movable relative to the input shaft. A second drive wheel is axially movable and freely rotatable on the input shaft for releasably engaging with a ring wheel which is fixed to the input shaft. A third free wheeled driving wheel is supported on the output shaft 11, said third drive wheel being constantly engaged with the first drive wheel. A fourth drive wheel is fixed to the output shaft and is constantly engaged with the second drive wheel. A spring presses the first drive wheel axially towards and into engagement with the second drive wheel. This prior art transmission changes between gear ratios depending upon the torque applied to the input shaft.

### STATEMENT OF INVENTION

The present invention is an automatic transmission comprising a first axle (A) having first and second drive wheel means (101,102) mounted thereon, the second drive wheel means (102) being coupled to a torsion coupling (106) which restricts the transmitted torque to a rated torque and enables idle running when the rated torque is exceeded; a second axle (B) having third and fourth drive wheel means (103,104) mounted thereon with the third drive wheel means (103) rotatably coupled to the first drive wheel means (101) and the fourth drive wheel means (104) rotatably coupled to the second drive wheel means (102), the first (101) and fourth drive wheel means (104) are fixed on their respective shafts to rotate therewith, the speed ratio of the second drive wheel means to the fourth drive wheel means being different from the speed ratio of the first drive wheel means to the third drive wheel means and the third drive wheel means being coupled to a single direction device (105) which enables drive to be transmitted between the first and second axles in one direction of rotation only, whereby drive is transmitted between the second and fourth drive wheel means (102,104) until a load causes the rated torque of the torsion coupling to be exceeded when drive is transmitted between the first and third drive wheel means, so as to enable drive to be transmitted between the first and second axles in both the forward and reverse directions of rotation.

### BRIEF DESCRIPTION OF THE DRAWINGS

Figure 1 is a schematic drawing of the fundamental principle of the structure of the cross coupling linking-up wheel train of a nonharmonious unequal ratio complex number wheel trains and the device in application.

Figure 2 is the schematic drawing of the embodiment of the application of the cross coupling linking-up wheel trains of the nonharmonious unequal ratio complex number wheel trains in same direction driving organism.

Figure 3 is a schematic drawing of the embodiment of the application of the cross coupling linking-up wheel train of the nonharmonious unequal ratio complex number wheel trains and the device of application in multiple stop organism.

Figure 4 is an embodiment of the multi-speed gears further made into a coupling structure.

Figure 5 is the schematic drawing of the embodiment cross coupling linking-up wheel train of the nonharmonious unequal ratio complex number wheel trains and the device of application to be connected to the operating and controlling master clutch;

Figure 6 is the schematic drawing of the action characteristics of Figure 5.

### DETAILED DESCRIPTION OF THE INVENTION

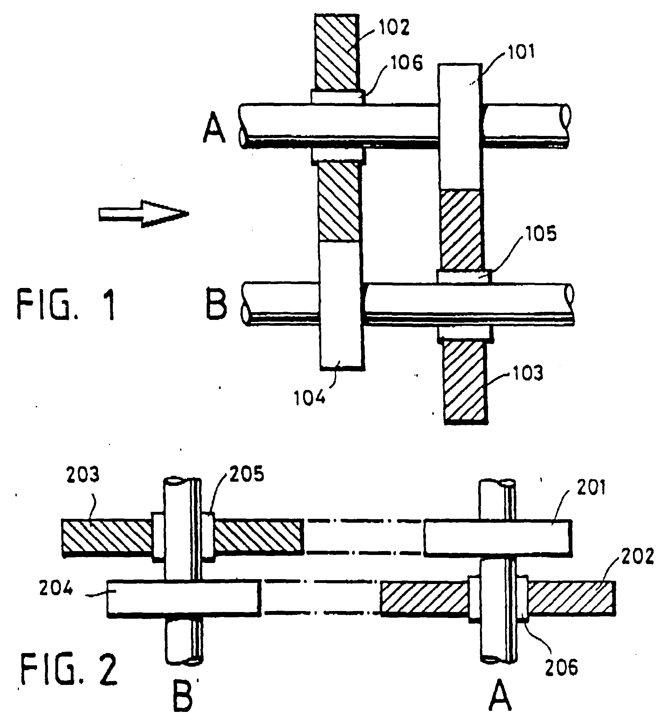

Where a complex number of wheels trains are coupled between conventional axles, cross coupling wheels trains between the driving wheels should have an identical driving ratio. The present invention seeks to provide a transmission device having differential non-harmonious linked wheels trains of different speed ratios permitting a change of speed ratio according to the load automatically or having different output speed ratios on the occurrence of forward and reverse drive. Figure 1 shows the principle of the invention schematically, the structure providing the drive wheel trains having different speed ratios able to operate together. The transmission includes:
a first axle A performs forward or reverse rotation for input and output,
a drive train, constituted by a gear, a friction wheel, a belt pulley, or a chain wheel, or a combination of these components including a first drive wheel 101 locked steadily on to the first axle A; a fourth drive wheel 104 is locked steadily on a second axle B; a second drive wheel 102 is combined with a torsion restricting coupling 106 which is able to restrict the transmission torsion and then inserted into the first axle A and coupled with the fourth drive wheel 104 of the second axle B; a third drive wheel 103 is to combine with a single direction bearing 105 (or other single direction driving device) and then inserted into the second axle B. The feature is that the speed ratio of the first and third drive wheels 101,103 is different from the speed ratio of the second and fourth drive wheels 102 and 104; the torsion restricting coupling is able to provide the sliding idle running to be produced once excessive transmission torsion exists between the second drive wheel 102 and the first axle A.

According to the principle of the above structure, while the third drive wheel 103 drives counterclockwise against the single direction bearing of the second axle B, the second drive wheel 102 is larger than the fourth drive wheel 104 and the third drive wheel 103 is larger than the first drive wheel 101. The applications of the above structure will comprise:
(1) First axle A is the primary axle as looking at it from the direction of the arrow, it drives clockwise, and the second axle B is in the state of output axle.
(2) First axle A is the primary axle as looking at it from the direction of the arrow, it drives counterclockwise, and the second axle B is in the state of output axle.
(3) First axle A is the primary axle as looking at it from the direction of the arrow, it performs bidirectional driving, and the second axle B is in the state of output axle.
(4) Second axle B is the primary axle as looking at it from the direction of the arrow, it drives clockwise, and the first axle A is in the state of output axle.
(5) Second axle B is the primary axle as looking at it from the direction of the arrow, it drives counterclockwise, and the first axle A is in the state of output axle.
(6) Second axle B is the primary axle as looking at it from the direction of the arrow, it performs bidirectional driving, and the first axle A is in the state of output axle.

The above applications and efficacy is discussed respectfully as follows:

Regarding (1) first axle A to be the primary axle to drive clockwise as looking at it from the direction of the arrow, the second axle B is an output axle, whilst first axle A turns and the load of second axle B is less than the rated torsion limit of the torsion limit of the torsion restricting coupling 106, on account of the second drive wheel 102 speeding up the fourth drive wheel 104, and the speed of the third drive wheel 103 is lower due to its diameter being larger than that of the first drive wheel 101, it forms idle running with the second axle B, at this time second axle B is sped down to output counterclockwise with moderate speed; if the lead of the second axle B increased to exceed the rated torsion of the torsion restricting device 106, sliding will occur between the first axle A and the second drive wheel 102 to cause second axle B to receive the same direction lower speed and large torsion output of the first drive wheel 101 against the driving of the third drive wheel 103. The present design is applicable to the driving of electric tools, hoist, communication machinery, or mechanical organism.

Regarding (2) first axle A to be the primary axle as looking at it from the direction of the arrow, while it drives counterclockwise, second axle B does not perform output, first axle A and second drive wheel 102 present the state of sliding.

Regarding (3) first axle A to be the primary axle as looking at it from the direction of the arrow, it performs bidirectional driving, second axle B is the output axle providing the feature of the mixing of (1) and (2); if to install the single direction bearing adversely, it is able to attain the same function in adverse direction.

Regarding (4) second axle B to be the primary axle as looking at it from the direction of the arrow, it drives clockwise, first axle A is the output axle, to be sped up to output counterclockwise, and the second drive wheel 102 produces sliding against first axle A via the torsion restricting device 106.

Regarding (5) second axle B to be the primary axle as looking at it from the direction of the arrow, it drives counterclockwise, first axle A is the output axle presents clockwise speeding down restricting torsion output.

Regarding (6) second axle B to be the primary axle as looking at it from the direction of the arrow, it performs bidirectional driving, first axle A is the output axle presenting the feature of the combination of (4) and (5); if to install the single direction axle adversely, it is able to attain the same function in adverse direction.

Figure 2 is the embodiment of the cross coupling linking-up wheel train of the application of the nonharmonious unequal ratio complex number wheel trains and the device trains and the device of application in same direction driving organism, in the drawing the primary wheel and the driving wheel are chain wheels to drive by means of a chain or belt pulley to drive by means of the belt; in which the first drive wheel 201 is locked steadily on the first axle A; the fourth drive wheel 204 is locked steadily on the second axle B; the second drive wheel 202 is to combine with the torsion restricting device 206 which is able to restrict the driving torsion, and then inserted into first axle A to drive together with the fourth drive wheel 204 of the second axle B in the same direction by means of a chain or belt; the third drive wheel 203 is to combine with a single direction bearing 205 (or other single driving device) and then inserted into second axle B; the feature is that the speed ratio of the first and third drive wheels 201 and 203 is different from that of the second and fourth drive wheels 202 and 204; the torsion restricting device is able to produce sliding idle running in case excessive transmission torsion appeared between the second drive wheel 202 and first axle A.

According to the above principle of structure, while single direction bearing 205 causes the second drive wheel 202 to drive against second axle B clockwise to look at it from the direction of the arrow, the second drive wheel 202 is larger than the fourth drive wheel 204, and the third drive wheel 203 is larger than the first drive wheel 201, it is discovered that the application of the above structure comprise:
(1) First axle A is the primary axle to drive clockwise as looking at it from the direction of the arrow, and second axle B is in the state of an output axle.
(2) First axle A is the primary axle to drive counterclockwise as looking at it from the direction of the arrow, and second axle B is in the state of an output axle.
(3) First axle A is the primary axle to perform bidirectional driving as looking at it from the direction of the arrow, and second axle B is in the state of an output axle.
(4) Second axle B is the primary axle to drive clockwise as looking at it from the direction of the arrow, and first axle A is in the state of an output axle.
(5) Second axle B is the primary axle to drive counterclockwise as looking at it from the direction of the arrow, and first axle A is in the state of an output axle.
(6) Second axle B is the primary axle to perform bidirectional driving as looking at it from the direction of the arrow, and first axle A is in the state of an output axle.

The above applications and efficacy is discussed respectfully as follows:

Regarding (1) first axle A to be the primary axle to drive clockwise as looking at it from the direction of the arrow, the second axle B is an output axle, while first axle A turns and the load of second axle B is less than the transmission torsion of the torsion restricting device 106, on account of the second drive wheel 102 speeding up the fourth drive wheel 104, and the speed of the third drive wheel 103 is lower due to its diameter being larger than that of the first drive wheel 101, it forms idle running with the second axle B, at this time second axle B is sped down to output counterclockwise with moderate speed; if the lead of the second axle B increased to exceed the rated torsion of the torsion restricting device 106, sliding will occur between the first axle A and the second drive wheel 102 to cause second axle B to receive the same direction lower speed and large torsion output of the first drive wheel 101 against the driving of the third drive wheel 103. The present design is applicable to the driving of electric tools, hoist, communication machinery, or mechanical organism.

Regarding (2) first axle A to be the primary axle as looking at it from the direction of the arrow, while it drives counterclockwise, second axle B does not perform output, first axle A and second drive wheel 102 present the state of sliding.

Regarding (3) first axle A to be the primary axle as looking at it from the direction of the arrow, it performs bidirectional driving, second axle B is the output axle providing the feature of the mixing of (1) and (2); if to install the single direction bearing adversely, it is able to attain the same function in adverse direction.

Regarding (4) second axle B to be the primary axle as looking at it from the direction of the arrow, it drives clockwise, first axle A is the output axle, to be sped up to output counterclockwise, and the second drive wheel 102 produces sliding against first axle A via the torsion restricting device 106.

Regarding (5) second axle B to be the primary axle as looking at it from the direction of the arrow, it drives counterclockwise, first axle A is the output axle presents clockwise speeding down restricting torsion output.

Regarding (6) second axle B to be the primary axle as looking at it from the direction of the arrow, it performs bidirectional driving, first axle A is the output axle presenting the feature of the combination of (4) and (5); if to install the single direction axle adversely, it is able to attain the same function in adverse direction.

Source of the motive force to drive the above first axle A engine, or natural force or driving it manually. The above restricting torsion driving device may be radial structure or axial structure and also to constitute the driving wheel with non-skid gear or chain wheel and constitute the driving wheel with sliding belt pulley or friction wheel to produce friction driving or sliding directly, it is applicable to the organism with brief sliding time especially.

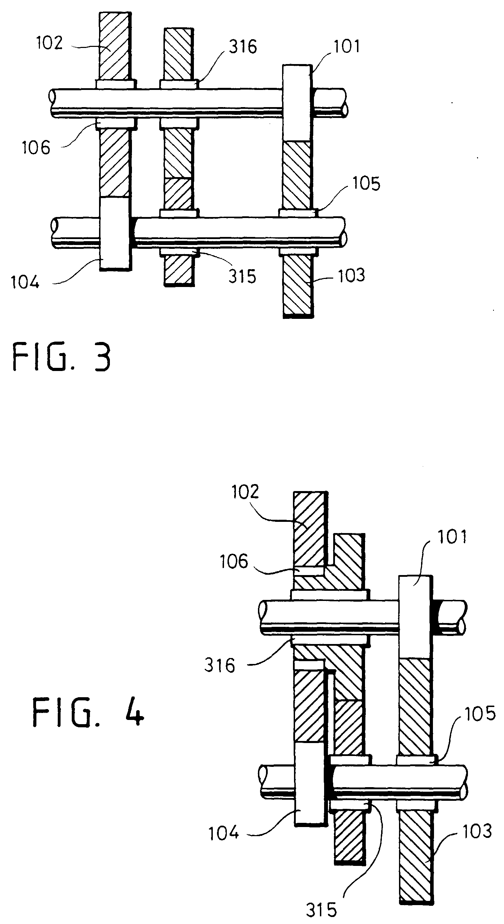

The further application of the above design is to add a middle section wheel train, including a fifth and a sixth drive wheel, to the original settable torsion sliding drive wheels and the drive wheel set providing the function of single direction driving as shown in Figure 3, different ratio of transformation to be increasing or decreasing presents between the middle section wheel trains, and the fifth and sixth drive wheels of the middle section wheel sets to be installed on the axles. The fifth driving wheel is coupled to an axle by any of various independent settable torsion driving devices (the torsion may be the same or selected additionally), and the sixth drive wheel of the middle section wheels to be installed on the axle of the driving wheel providing the function of single direction driving has also the single direction driving bearing with same action direction, the structure is able to cause the above two section wheel train to become the wheel train with more sections along with the enlargement of the ratio of transformation oft he load torsion to reduce the throw, and the multiple section structure includes the increasing ratio of transformation type and the decreasing ratio of transformation type of mixed type.

In the above application, the principle of the optional fifth and sixth drive wheel train torsions are as follows:
(1) While the last section is the increasing ratio of transformation of maximum speed up section, the torsion of the settable torsion device 316 between the fifth drive wheel and the axle is larger than the torsion of the last section settable torsion device 306, the direction of the single direction bearing 315 between the sixth drive wheel and the axle is the same as that of the section.
(2) While the last section is decreasing ratio of transformation of maximum speed down section, the torsion of the middle section settable torsion device 316 is smaller than the torsion of the last settable torsion device 306.
(3) While the application is connected in series or in parallel, the principle of option will be the same as above.

FIG. 4 is an embodiment of the multi-speed gears further made into a coupling structure which may reduce the sliding speed difference of the limited torque bearing at higher speed and decrease the loss thereof. The relationship between the function of related settable torsion device and one-way bearing are the same as shown in FIG. 3.

The embodiment of more sections, it is also to be based on the above principle and so first, to be applied to same direction driving chain wheel or belt pulley is also able to be based on the above principle and so forth.

The above embodiment are exemplary applications, the principle of the present design is able to be practised based on the following principle of option, the function and principle remain the same:
---- Single direction bearing is able to be installed between one of the components of the driving components set to be coupled mutually to drive and the coupling axle;
---- The setable torsion sliding component is able to be installed between one of the directly coupled driving components set and the coupling axle.

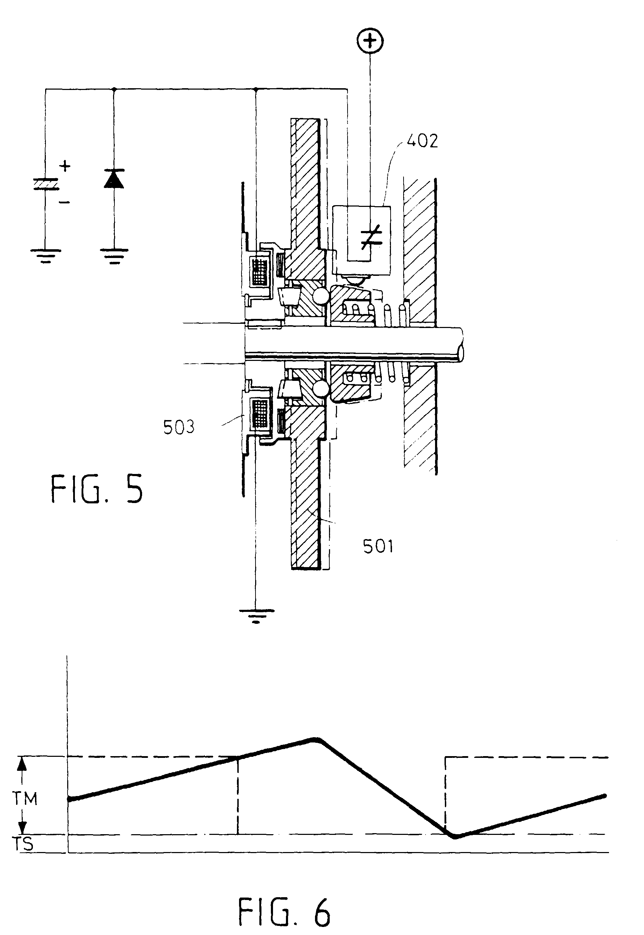

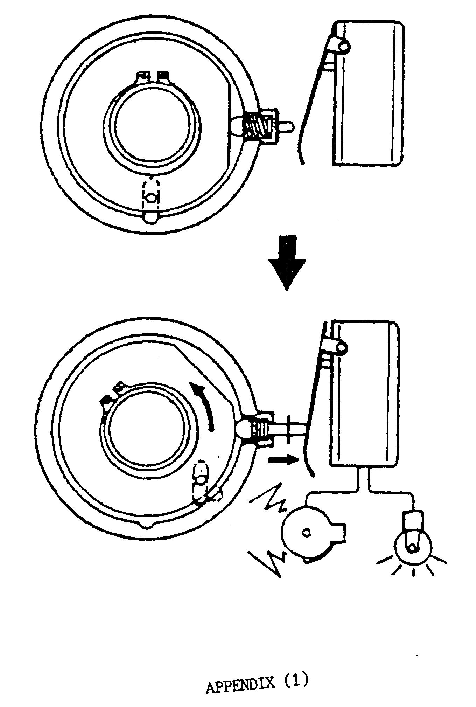

In addition, it is also able to connect in parallel with the controllable master clutch to constitute nonharmonious unequal ratio complex number wheel train cross linking-up wheel train and the application device, Figure 5 is the schematic drawing of embodiment, an excessive torsion detection device is installed further for the mechanical type setable torsion device as shown in appendix (1), and a master clutch set 503 to be controlled by the torsion detection device 502 is installed in parallel between the driving wheel 501 to by coupled with the setable torsion device originally and the driving structure of the axle to transmit the coupling torque between the driving wheel and the axle in common, once the setable torsion becomes excessive, the setable torsion device successive sliding of the excessive torsion detection device 502 is provided to maintain the detection signal of the excessive torsion detection device to be in the state of excessive torsion to cut off the master clutch set 503. In the application of eddy coupling or electromagnetic driving, it is to retain smaller electromagnetic coupling force to maintain the state of the detection of the excessive torsion. On account of the majority of the coupling force moment to be loaded by the master clutch, while the load torque is reduced to be within the coupling torque of the setable torsion device or the load becomes empty-loaded, the excessive torsion detection device will control the opening and closing of the master clutch. Figure 6 is the schematic drawing of the feature of the action of Figure 5; the above excessive torsion detection device may be constituted by electrical machinery electronic or hydrokinetic-type structure to match up with eddy coupling type, electromagnetic driving type, hydrokinetic-type or mechanical action type structure to be used as the master clutch of switch.

To sum up, by means of the single direction driving device to be provided in the cross coupling driving system of the nonharmonious unequal ratio complex number wheel train and the mutual action of the driving of the restricting torsion driving device, it is able to provide the output ratio with different speed ratio following the ratio of transmission of the load automatically or provide the output ratio with different speed ratio once obverse or reverse turning is produced and applied to various driving structures, the present invention is innovative and practical.

## Claims

1. An automatic transmission comprising a first axle (A) having first and second drive wheel means (101,102) mounted thereon, the second drive wheel means (102) being coupled to a torsion coupling (106) which restricts the transmitted torque to a rated torque and enables idle running when the rated torque is exceeded; a second axle (B) having third and fourth drive wheel means (103,104) mounted thereon with the third drive wheel means (103) rotatably coupled to the first drive wheel means (101) and the fourth drive wheel means (104) rotatably coupled to the second drive wheel means (102), the first (101) and fourth drive wheel means (104) are fixed on their respective shafts (A, B) to rotate therewith, the speed ratio of the second drive wheel means to the fourth drive wheel means being different from the speed ratio of the first drive wheel means to the third drive wheel means and the third drive wheel means being coupled to a single direction device (105) which enables drive to be transmitted between the first and second axles in one direction of rotation only, whereby drive is transmitted between the second and fourth drive wheel means (102,104) until a load causes the rated torque of the torsion coupling to be exceeded when drive is transmitted between the first and third drive wheel means, so as to enable drive to be transmitted between the first and second axles in both the forward and reverse directions of rotation.

2. An automatic transmission according to claim 1 wherein the speed ratio of the second drive wheel means (102) to the fourth drive wheel means (104) is greater than the speed ratio of the first drive wheel means (101) to the third drive wheel means (103).

3. An automatic transmission according to claim 1 or claim 2, further comprising a fifth drive wheel means on one of said axles and a sixth drive wheel means on the other of said axles and rotatably coupled to said fifth drive wheel means, the fifth drive wheel means being coupled to its associated axle by a further torsion coupling (316) and the sixth drive wheel means being coupled to its associated axle by a further single direction device (315).

4. An automatic transmission according to claim 3, wherein said second drive wheel means (102) is coupled to said fifth drive wheel means by said first-mentioned torsion coupling (106) to give a multi-step transmission.

5. An automatic transmission according to any preceding claim wherein said torsion coupling (106,316) comprises a torsion detector (402), and a clutch (503) controlled by an output signal from said torsion detector.

## Patentansprüche

1. Automatikgetriebe mit einer ersten Welle (A), die ein erstes und ein zweites darauf angeordnetes Antriebsradmittel (101, 102) aufweist, wobei das zweite Antriebsradmittel (102) mit einer Torsionskupplung (106) gekoppelt ist, die das übertragene Drehmoment auf ein Nenndrehmoment begrenzt und ein Leerlaufen ermöglicht, wenn das Nenndrehmoment überschritten ist, und das eine zweite Welle (B) aufweist, die dritte und vierte Antriebsradmittel (103, 104) besitzt, die darauf angeordnet sind, wobei das dritte Antriebsradmittel (103) auf Drehung mit dem ersten Antriebsradmittel (101) gekoppelt und das vierte Antriebsradmittel (104) auf Drehung mit dem zweiten Antriebsradmittel (102) gekoppelt sind, das erste (101) und das vierte Antriebsradmittel (104) fest auf ihren betreffenden Wellen (A, B) angebracht sind, um sich damit zu drehen, das Drehzahlverhältnis von zweitem Antriebsradmittel zu viertem Antriebsradmittel von dem Drehzahlverhältnis von erstem Antriebsradmittel zu drittem Antriebsradmittel verschieden ist und das dritte Antriebsradmittel mit einer in einer einzigen Richtung wirkenden Vorrichtung (105) gekoppelt ist, die ermöglicht, daß Antriebskraft zwischen der ersten und der zweiten Welle in lediglich einer Drehrichtung übertragbar ist, wobei die Antriebskraft zwischen zweitem und viertem Antriebsradmittel (102, 104) übertragen wird, bis eine Belastung bewirkt, daß das Nenndrehmoment der Torsionskupplung überschritten wird, wenn Antriebskraft zwischen erstem und drittem Antriebsradmittel übertragen wird, um zu ermöglichen, daß Antriebskraft zwischen erster und zweiter Welle sowohl in Vorwärts- als auch Rückwärts-Drehrichtung übertragen wird.

2. Automatikgetriebe nach Anspruch 1, bei dem das Drehzahlverhältnis von zweitem Antriebsradmittel (102) zu viertem Antriebsradmittel (104) größer ist als das Drehzahlverhältnis von erstem Antriebsradmittel (101) zu drittem Antriebsradmittel (103).

3. Automatikgetriebe nach Anspruch 1 oder 2, außerdem ein fünftes Antriebsradmittel auf einer der genannten Wellen und ein sechstes Antriebsradmittel auf der anderen der genannten Wellen aufweisend, das mit dem genannten fünften Antriebsradmittel drehbar gekoppelt ist, wobei das fünfte Antriebsradmittel mit seiner zugehörigen Welle über eine weitere Torsionskupplung (306) gekoppelt ist und das sechste Antriebsradmittel mit seiner zugehörigen Welle über eine weitere in einer Richtung wirkende Vorrichtung (315) gekoppelt ist.

4. Automatikgetriebe nach Anspruch 3, bei dem das genannte zweite Antriebsradmittel (102) mit dem genannten fünften Antriebsradmittel über die genannte, ersterwähnte Torsionskupplung (106) gekoppelt ist, um ein mehrstufiges Getriebe zu ergeben.

5. Automatikgetriebe nach irgendeinem vorausgehenden Anspruch, bei dem die genannte Torsionskupplung (106, 316) einen Drehmomentdetektor (402) aufweist, sowie eine Kupplung (503), die durch ein Ausgangssignal des genannten Drehmomentdetektors gesteuert ist.

## Revendications

1. Transmission automatique comprenant un premier arbre (A) sur lequel sont montés des premier et second pignons moteurs (101,102), le second pignon moteur (102) étant relié à un accouplement de torsion (106) qui limite le couple transmis à un couple nominal et permet le roulage à vide lorsque le couple nominal est dépassé ; un second arbre (B) sur lequel sont montés des troisième et quatrième pignons moteurs (103-104), le troisième pignon moteur (103) étant couplé à rotation au premier pignon moteur (101) et le quatrième pignon moteur (104) étant couplé à rotation au second pignon moteur (102), le premier et le quatrième pignons moteurs (101,104) sont montés fixes sur leurs arbres (A,B) respectifs de façon à tourner avec ceux-ci, le rapport de vitesse du second pignon moteur au quatrième pignon moteur étant différent du rapport de vitesse du premier pignon moteur au troisième pignon moteur, et le troisième pignon moteur étant relié à un dispositif unidirectionnel (105) qui permet de transmettre l'entraînement entre les premier et second arbres dans un sens de rotation seulement, la force motrice étant transmise entre les second et quatrième pignons moteurs (102,104) jusqu'à ce qu'une charge provoque le dépassement du couple nominal de l'accouplement de torsion lorsque la force motrice est transmise entre les premier et troisième pignons moteurs, de façon à permettre la transmission de la force motrice entre les premier et second arbres dans chacun des sens de rotation avant et arrière.

2. Transmission automatique selon la revendication 1, dans laquelle le rapport de vitesse du second pignon moteur (102) au quatrième pignon moteur (104) est supérieur au rapport de vitesse du premier pignon moteur (101) au troisième pignon moteur (103).

3. Transmission automatique selon l'une quelconque des revendications 1 ou 2, comprenant de plus un cinquième pignon moteur porté par l'un desdits arbres et un sixième pignon moteur porté par l'autre desdits arbres et couplé à rotation audit cinquième pignon moteur, le cinquième pignon moteur étant couplé à son arbre associé par un autre accouplement de torsion (316) et le sixième pignon moteur étant couplé à son arbre associé par un autre dispositif unidirectionnel (315).

4. Transmission automatique selon la revendication 3, dans laquelle ledit second pignon moteur (102) est couplé audit cinquième pignon moteur par l'intermédiaire de l'accouplement de torsion (106) cité en premier pour produire une transmission à pas multiples.

5. Transmission automatique selon l'une quelconque des revendications précédentes, dans laquelle ledit accouplement de torsion comprend un détecteur de torsion (402), et un embrayage (503) commandé par un signal de sortie provenant dudit détecteur de torsion.
